(19) **Europäisches Patentamt**
**European Patent Office**
**Office européen des brevets**

(11) **EP 3 770 856 B1**

(12) **EUROPEAN PATENT SPECIFICATION**

(45) Date of publication and mention
of the grant of the patent:
**09.03.2022 Bulletin 2022/10**

(21) Application number: **19874766.9**

(22) Date of filing: **25.06.2019**

(51) International Patent Classification (IPC):
**G06T 7/90** *(2017.01)*     **H05B 45/22** *(2020.01)*

(52) Cooperative Patent Classification (CPC):
**H05B 45/22**

(86) International application number:
**PCT/CN2019/092764**

(87) International publication number:
**WO 2020/237761 (03.12.2020 Gazette 2020/49)**

(54) **MIXED COLOR CORRECTION METHOD AND APPARATUS, TERMINAL DEVICE, AND READABLE STORAGE MEDIUM**

VERFAHREN UND VORRICHTUNG ZUR KORREKTUR VON MISCHFARBEN, ENDGERÄTEVORRICHTUNG UND LESBARES SPEICHERMEDIUM

PROCÉDÉ ET APPAREIL DE CORRECTION DE COULEUR MÉLANGÉE, DISPOSITIF DE TERMINAL ET SUPPORT DE STOCKAGE LISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2019 CN 201910471282**

(43) Date of publication of application:
**27.01.2021 Bulletin 2021/04**

(73) Proprietor: **Guangzhou Yajiang Photoelectric Equipment Co., Ltd.**
**Guangzhou, Guangdong 510880 (CN)**

(72) Inventors:
• **CHEN, Zhiman**
**Guangzhou, Guangdong 510880 (CN)**

• **HUANG, Rongfeng**
**Guangzhou, Guangdong 510880 (CN)**
• **WANG, Guohai**
**Guangzhou, Guangdong 510880 (CN)**

(74) Representative: **Meyer, Thorsten**
**Meyer Patentanwaltskanzlei**
**Pfarrer-Schultes-Weg 14**
**89077 Ulm (DE)**

(56) References cited:
**CN-A- 1 758 152       CN-A- 102 968 011**
**CN-A- 107 085 858     JP-A- 2002 120 388**
**US-A1- 2012 019 164   US-A1- 2014 035 465**

**EP 3 770 856 B1**

**Description**

FIELD OF THE INVENTION

The present invention relates to the area of lamp color control and is more particularly concerned with a method, device, terminal setting and readable storage medium for correcting mixed color.

BACKGROUND OF THE INVENTION

Respect to the currently lamp with multiple mixed color, when setting different color for it, the engineer need to constantly try to adjust to find the correct color. The prior art, e.g. the patent with the application number of CN201710183658.4, discloses a method for rapidly realizing mixing arbitrary colors which can realize mixing arbitrary colors. However, the above color mixing method is based on the ideal condition that the color coordinate do not change under different illumination. And in fact, when the color illumination changes, the color coordinate will change slightly. Therefore, the color obtained by the above color mixing method has a deviation with the target color and the color needs to be adjusted and corrected to maintain the consistency of the color. To solve this problem, the prior art, e.g. the patent with the application number of CN201710183640.4, discloses a method for correcting mixed color. However, this method can only correct the mixed color obtained by mixing three colors, and cannot correct the mixed color obtained by mixing four or more colors. The patent with the publication number of US2012/0019164A1, discloses that a method of operating a lighting fixture comprising a plurality of discrete illumination sources of distinguishably different color coordinates comprises determining target color coordinates and luminous flux at which to operate the lighting fixture, and determining input electrical power values for each of the plurality of discrete illumination sources that substantially produce the target color coordinates and luminous flux by referencing a calibration data lookup table having calibration data based on measurements of the plurality of discrete illumination sources. The patent with the publication number of US2014/0035465A1, discloses that a lighting system having at least three light sources receives an input relating to color coordinates of a target point representing a desired color characteristic for a combined output from the light sources. The system corrects changes in performance of the light sources due to lifetime degradation in each of the light sources.

SUMMARY OF THE INVENTION

The embodiments of the present invention provide a method, device, terminal setting and readable storage medium for correcting mixed color, which can correct the mixed color obtained by mixing any number of colors.
An embodiment of the present invention provides a method for correcting mixed color, wherein the mixed color is that of the light of a lamp, comprising: acquiring color coordinates of standard mixed color as first color coordinates, the method further comprises:

acquiring color coordinates of mixed color to be corrected as second color coordinates, wherein the mixed color to be corrected is obtained by mixing a plurality of monochromatic lights with the standard mixed color as color mixing target;
calculating coordinates difference between the first color coordinates and the second color coordinates as first difference coordinates;
judging whether a coordinates value of the first difference coordinates exceeds a preset threshold, and when the coordinates value of the first difference coordinates exceeds the preset threshold, preforming following steps;
calculating a ratio of Y coordinate and X coordinate of the first difference coordinates to obtain first ratio;
calculating coordinates difference between the first color coordinates and color coordinates of the each monochromatic light to obtain a plurality of difference coordinates to be processed, and calculating ratios of Y coordinate and X coordinate of each difference coordinates to be processed respectively to obtain a plurality of ratios to be processed;
taking a ratio to be processed with the smallest difference from the first ratio as first ratio to be processed, taking the monochromatic light corresponding to the first ratio to be processed as a monochromatic light to be adjusted which need to be adjusted, and taking the difference between the first ratio to be processed and the first ratio as first difference to be processed;
when the first difference to be processed is zero, multiplying X coordinate of the first difference coordinates by X coordinate of the difference coordinates to be processed corresponding to the monochromatic light to be adjusted to obtain first product, and when the first product is less than zero, reducing a color channel value of the monochromatic light to be adjusted, otherwise, increasing the color channel value of the monochromatic light to be adjusted;
when the first difference to be processed isn't zero, calculating the following parameters,

$$A = \frac{(y_a - y_0)}{(x_a - x_0)} \; ; \; B = -1 \; ; \; C = y_a - x_a * \left( \frac{(y_a - y_0)}{(x_a - x_0)} \right) ;$$

$$x_f = \frac{(B*B*x_1 - A*B*y_1 - A*C)}{(A*A + B*B)} ;$$

$$y_f = \frac{(-A*B*x_1 + A*A*y_1 - B*C)}{(A*A + B*B)} ;$$

$$\Delta x_f = x_f - x_0 .$$

Wherein, $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected ;

when $\Delta x_f$ less than zero, reducing the color channel value of the monochromatic light to be adjusted, otherwise, increasing the color channel value of the monochromatic light to be adjusted.

Further, the amount of color channel value change, when the monochromatic light to be adjusted is adjusted, is calculated as following:

acquiring illumination value of the mixed color to be corrected, and calculating the amount of illumination value change as following when the monochromatic light to be adjusted is adjusted,

$$E_a = \frac{y_1 - y_0}{\frac{y_1 * y_0}{y_a} - y_1} * E_1 ;$$

wherein, $E_a$ is the illumination value that the monochromatic light to be adjusted need to change and $E_1$ is the amount of illumination value change when the monochromatic light to be adjusted is adjusted;

according to the amount of the illumination value change, calculating the amount of color channel value change of the monochromatic light to be adjusted according to a preset linear conversion relationship.

Further, color coordinates of the each monochromatic light are obtained as following: testing each monochromatic light under full brightness illumination to obtain the color coordinates of the each monochromatic light.

Further, comprising: when the coordinates value of the first difference coordinates doesn't exceed the preset threshold, no processing is performed.

Based on the method embodiments, the present invention provides corresponding device embodiments.

Another embodiment of the present invention provides a device for correcting mixed color, comprising color coordinates acquisition module, first difference calculation module, and color correction module, wherein the color correction module comprises first ratio calculation unit, ratio to be processed calculation unit, first difference to be processed calculation unit and adjustment unit;

the color coordinates acquisition module is configured to acquire color coordinates of standard mixed color as first color coordinates, and acquire color coordinates of mixed color to be corrected as second color coordinates, wherein the mixed color to be corrected is obtained by mixing a plurality of monochromatic lights with the standard mixed color as color mixing target;

the first difference calculation module is configured to calculate coordinates difference between the first color coordinates and the second color coordinates as first difference coordinates;

the first ratio calculation unit is configured to calculate, when a coordinates value of the first difference coordinates exceeds a preset threshold, the ratio of Y coordinate and X coordinate of the first difference coordinates to obtain first ratio;

the ratio to be processed calculation unit is configured to calculate coordinates difference between the first color coordinates and color coordinates of each monochromatic light to obtain a plurality of difference coordinates to be processed, and calculate the ratio of Y coordinate and X coordinate of each difference coordinates to be processed respectively to obtain a plurality of ratios to be processed;

the first difference to be processed calculation unit is configured to take a ratio to be processed with the smallest difference from the first ratio as first ratio to be processed, take the monochromatic light corresponding to the first ratio to be processed as a monochromatic light to be adjusted which need to be adjusted, and take the difference between the first ratio to be processed and the first ratio as first difference to be processed;

the adjustment unit is configured to multiply the X coordinate of the first difference coordinates by the X coordinate of the difference coordinates to be processed corresponding to the monochromatic light to be adjusted to obtain first product; when the first product is less than zero, reduce a color channel value of the monochromatic light to be adjusted, otherwise, increase the color channel value of the monochromatic light to be adjusted;

when the first difference to be processed isn't zero, calculate the following parameters;

$$A = \frac{(y_a - y_0)}{(x_a - x_0)} \; ; \; B = -1; \; C = y_a - x_a * \left( \frac{(y_a - y_0)}{(x_a - x_0)} \right);$$

$$x_f = \frac{(B*B*x_1 - A*B*y_1 - A*C)}{(A*A + B*B)};$$

$$y_f = \frac{(-A*B*x_1 + A*A*y_1 - B*C)}{(A*A + B*B)};$$

$$\Delta x_f = x_f - x_0;$$

wherein $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected;

when $\Delta x_f$ less than zero, reduce the color channel value of the monochromatic light to be adjusted, otherwise, increase the color channel value of the monochromatic light to be adjusted.

By implementing the embodiments of the present invention, it has the following beneficial effects.

A method and a device for correcting mixed color are provided by the embodiments of the present invention. The method first sets the color coordinates of the standard mixed color, and meanwhile acquires the color coordinates of the mixed color, that is the mixed color to be corrected, which is mixed by a plurality of monochromatic lights with the standard mixed color as color mixing target, then calculates the difference of the two color coordinates to obtain the first difference coordinates, judges whether the first difference coordinates exceeds a preset threshold, and when the first difference coordinates exceeds the preset threshold, it means that the difference between the mixed color to be corrected and the standard mixed color is large and correction is needed. At this time, first calculating the ratio of Y coordinate and X coordinate of the first difference coordinates to obtain first ratio, then calculating the difference between the color coordinates of each monochromatic light and the above first color coordinates to obtain the above difference coordinates to be processed, then calculating the ratio of Y coordinate and X coordinate of each difference coordinates to be processed to obtain the ratio to be processed, then comparing all ratios to be processed with the first ratio, and taking a monochromatic light corresponding to a ratio to be processed with the smallest difference as the monochromatic light to be adjusted, then adjusting the color channel value of the monochromatic light to realize the correction of the mixed color to be corrected. No matter the mixed color to be corrected is mixed by how many kinds of monochromatic light, what need is only select a kind of monochromatic light to be adjusted by the above method, and adjust the color channel value of the monochromatic light, then the correction of the mixed color to be corrected can be realized.

BRIEF DESCRIPTION OF DRAWINGS

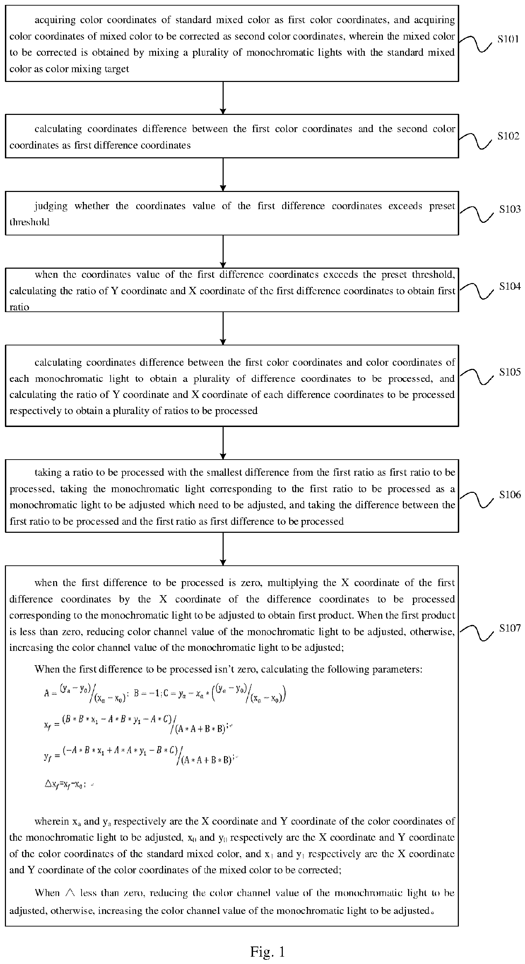

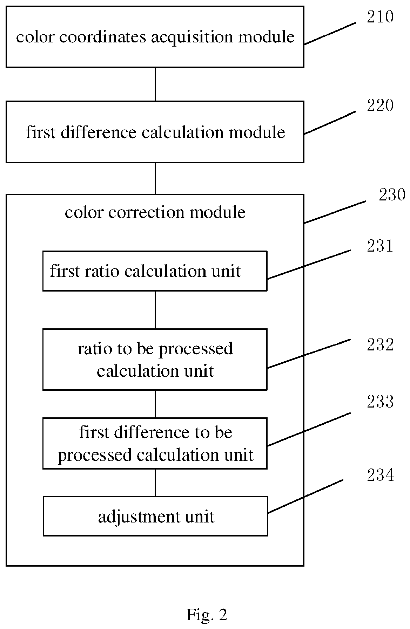

Figure 1 is a flow diagram of the method for correcting mixed color provided by an embodiment of the prevent invention. Figure 2 is a structure diagram of the device for correcting mixed color provided by an embodiment of the prevent invention.

DETAILED DESCRIPTION OF ILLUSTRATED EMBODIMENTS

In the following, the technical solutions in the embodiments of the present invention will be clearly and completely described with reference to the drawings in the embodiments of the present invention.

As shown in Figure 1, the flow diagram of the method for correcting mixed color provided by an embodiment of the prevent invention, comprises:

Step S101, acquiring color coordinates of standard mixed color as first color coordinates, and acquiring color coordinates of mixed color to be corrected as second color coordinates, wherein the mixed color to be corrected is obtained by mixing a plurality of monochromatic lights with the standard mixed color as color mixing target.

Step S102, calculating coordinates difference between the first color coordinates and the second color coordinates as first difference coordinates.

Step S103, judging whether the coordinates value of the first difference coordinates exceeds preset threshold.

Step S104, when the coordinates value of the first difference coordinates exceeds the preset threshold, calculating the ratio of Y coordinate and X coordinate of the first difference coordinates to obtain first ratio.

Step S105, calculating coordinates difference between the first color coordinates and color coordinates of each monochromatic light to obtain a plurality of difference coordinates to be processed, and calculating the ratio of Y coordinate and X coordinate of each difference coordinates to be processed respectively to obtain a plurality of ratios to be processed.

Step S106, taking a ratio to be processed with the smallest difference from the first ratio as first ratio to be processed, taking the monochromatic light corresponding to the first ratio to be processed as a monochromatic light to be adjusted which need to be adjusted, and taking the difference between the first ratio to be processed and the first ratio as first difference to be processed.

Step S107, when the first difference to be processed is zero, multiplying the X coordinate of the first difference coordinates by the X coordinate of the difference coordinates to be processed corresponding to the monochromatic light to be adjusted to obtain first product. When the first product is less than zero, reducing color channel value of the monochromatic light to be adjusted, otherwise, increasing the color channel value of the monochromatic light to be adjusted.

When the first difference to be processed isn't zero, calculating the following parameters:

$$A = {(y_a - y_0)}/{(x_a - x_0)} \; ; \qquad B = -1; \qquad C = y_a - x_a * \left({(y_a - y_0)}/{(x_a - x_0)}\right);$$

$$x_f = {(B*B*x_1 - A*B*y_1 - A*C)}/{(A*A + B*B)};$$

$$y_f = {(-A*B*x_1 + A*A*y_1 - B*C)}/{(A*A + B*B)};$$

$$\Delta \quad x_f = x_f - x_0;$$

wherein $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected.

When $\Delta^x f$ less than zero, reducing the color channel value of the monochromatic light to be adjusted, otherwise, increasing the color channel value of the monochromatic light to be adjusted.

Respect to step S101, the color coordinates of the mixed color to be obtained, that is the color coordinates of the above standard mixed color, is set firstly as first color coordinates. Then acquiring the above mixed color to be corrected according to the first color coordinates with the current color mixing method, such as the method for rapidly realizing mixing arbitrary colors disclosed in patent No. 201710183658.4. For a better understanding, the following is a brief description of the above color mixing method.

The color coordinates of standard chromaticity according to 1931CIE is calculated according to tristimulus values of RGB. The formula is as follows:

$$x = \frac{X}{X+Y+Z} , \qquad y = \frac{Y}{X+Y+Z} , \qquad z = \frac{Z}{X+Y+Z} .$$

In the formula, x and y are color coordinates, X, Y and Z are tristimulus values, and Y is luminance.

Setting the color coordinates of the three primary colors to (x1, y1), (x2, y2), (x3, y3), and the target color coordinates to (x, y), and the corresponding tristimulus values thereof respectively are (X1, Y1, Z1), (X2, Y2, Z2), (X3, Y3, Z3), (X, Y, Z). According to the relationship of tristimulus values and color coordinates:

$$x1 = \frac{X1}{X1+Y1+Z1} \tag{1}$$

$$y1 = \frac{Y1}{X1+Y1+Z1} \tag{2}$$

$$x2 = \frac{X2}{X2+Y2+Z2} \tag{3}$$

$$y2 = \frac{Y2}{X2+Y2+Z2} \tag{4}$$

$$x3 = \frac{X3}{X3+Y3+Z3} \tag{5}$$

$$y3 = \frac{Y3}{X3+Y3+Z3} \tag{6},$$

the color coordinates (x, y) of the mixed color is:

$$x = \frac{X1+X2+X3}{X1+X2+X3+Y1+Y2+Y3+Z1+Z2+Z3} \tag{7}$$

$$y = \frac{Y1+Y2+Y3}{X1+X2+X3+Y1+Y2+Y3+Z1+Z2+Z3} \tag{8}.$$

Setting Y1:Y2:Y3=1:Cr2:Cr3, and substituting it into the above equation to obtain Cr2 and Cr3:

$$Cr3 = \frac{\left(\dfrac{x1-x}{Ar1} - \dfrac{y1-y}{Br1}\right)}{\left(\dfrac{Ar2}{Ar1} - \dfrac{Br2}{Br1}\right)}$$

$$( 9 )$$

$$Cr2 = \frac{x1-x-Ar2*Cr3}{Ar1}$$

$$( 10 ) ;$$

wherein,

$$Ar1 = \frac{x*y1}{y2} - \frac{x2*y1}{y2}$$

$$Ar2 = \frac{x*y1}{y3} - \frac{x3*y1}{y3}$$

$$Br1 = \frac{y*y1}{y2} - y1$$

$$Br2 = \frac{y*y1}{y3} - y1 \quad,$$

then 1:Cr2:Cr3 is the illumination ratio of the three colors needed by the target color coordinates.

(a). When three colors RGB are mixed, to realize color mixed of target color, the illumination ratio of the three colors needs to be adjusted to 1: Cr2: Cr3.
(b). When four colors RGBW are mixed, there are two method to calculate.

Method one: Determining the illumination ratio of one color, calculating the target color (x, y) of the other three colors, then calculating the ratio of the other three colors according to the formula (9) and (10). The specific calculation process is as follows.
Setting the coordinates of the final target color O to (x0, y0), the coordinates of the fourth color W to (x4, y4), and the mixed color M mixed by the remaining three colors according to illumination of 1: Cr2: Cr3 to (x, y). According to the relation formula (1), (2), (3), (4) of tristimulus values and color coordinates and the formula of mixed color coordinates:

$$x = \frac{X1+X2}{X1+X2+Y1+Y2+Z1+Z2}$$

$$( 11 )$$

$$y = \frac{Y1+Y2}{X1+X2+Y1+Y2+Z1+Z2}$$

$$( 12 ),$$

substituting (x0, y0), (x4, y4) and the luminance ratio of the fourth color and the mixed color M mixed by the remaining three colors into the formula to obtain the coordinates of the mixed color M:

$$x = x4 * B \, , \qquad y = \frac{y4}{A} \, ,$$

wherein,

$$A = \frac{(1+C) * \dfrac{y4}{y0} - 1}{C}$$

$$B = \frac{(1+A*C) * \dfrac{x0}{x4} - 1}{A*C} \, .$$

Then substituting (x, y) into the formula (9) and (10) to calculate Cr2 and Cr3, and finally get the ratio of the four colors as 1: Cr2: Cr3: C * (1 + Cr2 + Cr3 ).

Method two: First determining the luminance ratio of any two colors, taking the mixed color mixed by the two colors according to the luminance ratio as one color, then mixing this mixed color and the other two colors, and calculating the mixed ratio. The specific calculation process is as follows.

Assuming that the mixed color M (x0, y0) is obtained by mixing the color B (x3, y3) and the color W (x4, y4) according to the ratio of 1:C2. Calculating the coordinates of the mixed color according to the formula (1), (2), (3), (4), (11) and (12),

$$x0 = x3 * \frac{1+B2*C2*A2}{1+A2*C2} \qquad (13)$$

$$y0 = y3 * \frac{1+C2}{1+A2*C2} \qquad (14)$$

wherein,

$$A2 = \frac{y3}{y4} \, , \qquad B2 = \frac{x4}{x3} \, , \qquad C2 = \frac{E4}{E3} \, .$$

Then substituting M (x0, y0) into the formula (9) and (10) to calculate Cr2 and Cr3, and finally get the ratio of the four colors as

$$1 : Cr2 : \frac{Cr3}{1+C2} : C2*Cr3(1+C2) \, .$$

(c). When five color RGBWA are mixed, the luminance ratio of three colors can be determined first, and the mixed color mixed by the three colors according to the luminance ratio can be seen as one color. Then mixing this mixed color and the other two colors and calculating the mixed ratio. The specific calculation process is as follows.

Assuming that the mixed color M (x0, y0) is obtained by mixing the color B (x3, y3), color W (x4, y4) and color A (x5, y5) according to the ratio 1: C3: C4, then calculating the coordinates of the mixed color M according to the formula (1)-(8),

$$x0 = x3 * \frac{1+B3*C3*A3+B4*C4*A4}{1+A4*C4+A3*C3}$$

$$y0 = y3 * \frac{1+C4+C3}{1+A4*C4+A3*C3},$$

wherein,

$$A3 = \frac{y3}{y4}, \quad A4 = \frac{y3}{y5}, \quad B3 = \frac{x4}{x3}, \quad B4 = \frac{x5}{x3}, \quad C3 = \frac{E4}{E3}, \quad C4 = \frac{E5}{E3}.$$

Then substituting M (x0, y0) into the formula (9) and (10) to calculate Cr2 and Cr3, and finally get the ratio of the four colors as

$$1 : Cr2 : \frac{1}{Cr3} : \frac{C3}{Cr3} : \frac{C4}{Cr3}.$$

For the mixing of more than five colors, it is only need to first determine the ratio of colors other than two colors, taking it as one color, and then mixing it with the remaining two colors.

According to the above color mixing method, under the condition that the color coordinates of the standard mixed color are known, when the standard mixed color is used as the color mixing target, the illumination value of each monochromatic light when color mixing can be calculated. The above mixed color to be corrected of the present invention can be obtained by mixing colors according to the illumination value of each monochromatic light, then the above second color coordinates can be obtained by directly calculating the color coordinates of the mixed color to be corrected.

The remaining steps of the solution are illustrated as follows. In order to avoid confusion with the meaning of the letters mentioned in step S101, the meaning of the letters involved in steps S102 to S107 is redefined here.

The first color coordinates are $(x_0, y_0)$, the second color coordinates are $(x_1, y_1)$ and the color coordinates of the four monochromatic lights R, G, B and W, under full brightness illumination, are measured respectively as $(x_r, y_r)$, $(x_g, y_g)$, $(x_b, y_b)$ and $(x_w, y_w)$. The definition of each letter in the subsequent steps S102 to S107 is subject to this, and has nothing to do with the definition of the letters mentioned in step S101.

Respect to the step S102, when the first color coordinates are $(x_0, y_0)$ and the second color coordinates are $(x_1, y_1)$, the first difference coordinates are $(\Delta x_1, \Delta y_1)$, wherein, $\Delta x_1 = x_1 - x_0$ and $\Delta y_1 = y_1 - y_0$.

Then the color correction steps of the subsequent steps S104 to S105 are performed.

Respect to the step S103, specifically, when $|\Delta x1| < 0.002$ and $|\Delta y1| < 0.002$, the above mixed color to be corrected meets the requirement and no correction is required. At this time, in a preferred embodiment, no processing is required. Otherwise, it's determined that the above first difference coordinates exceed the preset threshold. At this time, it is explained that the difference between the mixed color to be corrected and the standard mixed color is large, and adjustment is needed. Then the color correction steps of the subsequent steps S104 to S105 are performed.

Respect to the step S104, specifically, when the first difference coordinates are $(\Delta x_1, \Delta y_1)$, the first ratio is $k_1 = \Delta y_1 / \Delta x_1$

Respect to the step S105, specifically, assuming that the above mixed color to be corrected is mixed by four monochromatic lights, and in a preferred embodiment, testing each monochromatic light under full brightness illumination to obtain the color coordinates of each monochromatic light. For example, respect to the four monochromatic lights R, G, B and W, under full brightness illumination, their color coordinates respectively are $(x_r, y_r)$, $(x_g, y_g)$, $(x_b, y_b)$ and $(x_w, y_w)$. Then the above several difference coordinates to be processed are $(\Delta x_r, \Delta y_r)$, $(\Delta x_g, \Delta y_g)$, $(\Delta x_b, \Delta y_b)$, $(\Delta x_w, \Delta y_w)$, wherein, $\Delta x_r = x_r - x_0$, $\Delta y_r = y_r - y_0$, $\Delta x_g = x_g - x_0$ $\Delta y_g = y_g - y_0$, $\Delta x_b = x_b - x_0$, $\Delta y_b = y_b - y_0$, $\Delta x_w = x_w - x_0$ and $\Delta y_w = y_w - y_0$. And the above several ratio to be processed respectively are $k_r = \Delta y_r / \Delta x_r$, $k_g = \Delta y_g / \Delta x_g$, $k_b = \Delta y_b / \Delta x_b$, and $k_w = \Delta y_w / \Delta x_w$.

Respect to step 106, still taking the above four monochromatic lights as an example, calculating the absolute value of the difference between the ratio to be processed corresponding to each monochromatic light and the above first ratio, and when the absolute value is the smallest, the difference is the smallest. Taking the ratio to be processed with the smallest difference from the first ratio as the first ratio to be processed. Specifically, calculating and comparing $|k_1 - k_r|$, $|k_1 - k_g|$, $|k_1 - k_b|$, and $|k_1 - k_w|$, when $|k_1 - k_r|$ is the smallest, the above first ratio to be processed is $k_r$. Since the monochromatic light corresponding to $k_r$ is R, the monochromatic light R is took as the above monochromatic light to be corrected, and the above first difference is $|k_1 - k_r|$.

Respect to step 107, specifically, when the first difference to be processed is zero, that is $|k_1 - k_r| = 0$, multiplying the X coordinate $\Delta x_1$ of the first difference coordinates by the X coordinate $\Delta x_r$ of the difference coordinates to be processed corresponding to the monochromatic light to be adjusted, that is $\Delta x_1 * \Delta x_r$. When $\Delta x_1 * \Delta x_r < 0$, reducing color

channel value of the monochromatic light to be adjusted (the monochromatic light R), and when $\Delta x_1 * \Delta x_r \geq 0$, increasing color channel value of the monochromatic light to be adjusted (the monochromatic light R).

When the first difference to be processed isn't zero, that is $|k_1 - k_r| \neq 0$, calculating the following parameters:

$$A = \frac{(y_r - y_0)}{(x_r - x_0)} ; \qquad B = -1; \qquad C = y_r - x_r * \left( \frac{(y_r - y_0)}{(x_r - x_0)} \right);$$

$$x_f = \frac{(B*B*x_1 - A*B*y_1 - A*C)}{(A*A + B*B)};$$

$$y_f = \frac{(-A*B*x_1 + A*A*y_1 - B*C)}{(A*A + B*B)};$$

$$\Delta x_f = x_{f-} x_0.$$

When $\Delta^x f < 0$, reducing color channel value of the monochromatic light R, and when $\Delta^x f \geq 0$, increasing color channel value of the monochromatic light R.

Then the correction of the mixed color to be corrected can be realized.

In a preferred embodiment, after realizing the correction of the mixed color to be corrected, the corrected mixed color can be used as a new mixed color to be corrected, and the steps S102 to S103 can be repeatedly performed until the correction is completed.

In a preferred embodiment, the amount of color channel value change, when the monochromatic light to be adjusted is adjusted, is calculated by the following method.

Acquiring the illumination value of the mixed color to be corrected, and calculating the amount of illumination value change, when the monochromatic light to be adjusted is adjusted, according to the following method:

$$E_a = \frac{y_1 - y_0}{\frac{y_1 * y_0}{y_a} - y_1} * E_1 .$$

Wherein, $E_a$ is the illumination value that the monochromatic light to be adjusted need to change and $E_1$ is the amount of illumination value change when the monochromatic light to be adjusted is adjusted.

According to the amount of the illumination value change, calculating the amount of color channel value change of the monochromatic light to be adjusted according to a preset linear conversion relationship.

It should be noted that, in the art, the conversion relationship between the illumination value and the channel value can be set according to the actual situation. It can be obtained by linear conversion, which is well known in the art and will not be developed here.

Based on the above method embodiments, the corresponding device embodiments are provided.

As shown in figure 2, a device for correcting mixed color is provided by a embodiment of the present invention. The device comprises color coordinates acquisition module 210, first difference calculation module 220 and color correction module 230. wherein, the color correction module 230 comprises first ratio calculation unit 231, ratio to be processed calculation unit 232, first difference to be processed calculation unit 233 and adjustment unit 234.

The color coordinates acquisition module 210 is configured to acquire color coordinates of standard mixed color as first color coordinates, and acquire color coordinates of mixed color to be corrected as second color coordinates, wherein the mixed color to be corrected is obtained by mixing a plurality of monochromatic lights with the standard mixed color as color mixing target.

The first difference calculation module 220 is configured to calculate coordinates difference between the first color coordinates and the second color coordinates as first difference coordinates.

The first ratio calculation unit 231 is configured to calculate, when the coordinates value of the first difference coordinates exceeds preset threshold, the ratio of Y coordinate and X coordinate of the first difference coordinates to obtain first ratio.

The ratio to be processed calculation unit 232 is configured to calculate coordinates difference between the first color coordinates and color coordinates of each monochromatic light to obtain a plurality of difference coordinates to be processed, and calculate the ratio of Y coordinate and X coordinate of each difference coordinates to be processed respectively to obtain a plurality of ratios to be processed.

The first difference to be processed calculation unit 233 is configured to take a ratio to be processed with the smallest difference from the first ratio as first ratio to be processed, take the monochromatic light corresponding to the first ratio to be processed as a monochromatic light to be adjusted which need to be adjusted, and take the difference between the first ratio to be processed and the first ratio as first difference to be processed.

The adjustment unit 234 is configured to multiply the X coordinate of the first difference coordinates by the X coordinate of the difference coordinates to be processed corresponding to the monochromatic light to be adjusted to obtain first product; when the first product is less than zero, reduce color channel value of the monochromatic light to be adjusted, otherwise, increase the color channel value of the monochromatic light to be adjusted; when the first difference to be processed isn't zero, calculate the following parameters:

$$A = {(y_a - y_0)}/{(x_a - x_0)} \; ; \qquad B = -1 \; ; \qquad C = y_a - x_a * \left({(y_a - y_0)}/{(x_a - x_0)}\right) \; ;$$

$$x_f = {(B*B*x_1 - A*B*y_1 - A*C)}/{(A*A + B*B)} \; ;$$

$$y_f = {(-A*B*x_1 + A*A*y_1 - B*C)}/{(A*A + B*B)} \; ;$$

$$\Delta \quad x_f = \quad x_{f-} \quad x_0 \; ;$$

wherein $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected;

when $\Delta^x f$ less than zero, reduce the color channel value of the monochromatic light to be adjusted, otherwise, increase the color channel value of the monochromatic light to be adjusted.

It can be understood that the above device embodiments correspond to the method embodiments of the present invention, which can realize the method for correcting mixed color provided by any one of the above method embodiments of the present invention.

It should be noted that the device embodiments described above are only example, wherein the unit/module described as separate components may or may not be separated in physically, and the components displayed as unit/module may or may not be physical unit/module, that is, it may be located in one place, or may be distributed on multiple network units. Some or all of the modules may be selected according to actual needs to achieve the objective of the solution of the embodiments. In addition, in the drawings of the device embodiments provided by the present invention, the connection relationship between the modules indicates that there is a communication connection between them, which may be specifically implemented as one or more communication buses or signal lines. The ordinary person skilled in the art can understand and implement without creative efforts. The schematic diagram is only an example of a device for correcting mixed color, and does not constitute a limitation on the device for correcting mixed color.

By implementing the embodiments of the present invention, it has the following beneficial effects.

A method and a device for correcting mixed color are provided by the embodiments of the present invention. The method first sets the color coordinates of the standard mixed color, and meanwhile acquires the color coordinates of the mixed color, that is the mixed color to be corrected, which is mixed by a plurality of monochromatic lights with the standard mixed color as color mixing target, then calculates the difference of the two color coordinates to obtain the first difference coordinates, judges whether the first difference coordinates exceeds a preset threshold, and when the first difference coordinates exceeds the preset threshold, it means that the difference between the mixed color to be corrected and the standard mixed color is large and correction is needed. At this time, first calculating the ratio of Y coordinate and X coordinate of the first difference coordinates to obtain first ratio, then calculating the difference between the color coordinates of each monochromatic light and the above first color coordinates to obtain the above difference coordinates to be processed, then calculating the ratio of Y coordinate and X coordinate of each difference coordinates to be processed to obtain the ratio to be processed, then comparing all ratios to be processed with the first ratio, and taking a monochromatic light corresponding to a ratio to be processed with the smallest difference as the monochromatic light to be adjusted, then adjusting the color channel value of the monochromatic light to realize the correction of the mixed color to be corrected. No matter the mixed color to be corrected is mixed by how many kinds of monochromatic light, what need is only select a kind of monochromatic light to be adjusted by the above method, and adjust the color channel value of the monochromatic light, then the correction of the mixed color to be corrected can be realized.

**Claims**

1. A method for correcting mixed color, wherein the mixed color is that of the light of a lamp,

comprising: acquiring color coordinates of standard mixed color as first color coordinates, acquiring color coordinates of mixed color to be corrected as second color coordinates, wherein the mixed color to be corrected is obtained by mixing a plurality of monochromatic lights with the standard mixed color as a color mixing target; calculating a coordinates difference between the first color coordinates and the second color coordinates as first difference coordinates; judging whether a coordinates value of the first difference coordinates exceeds a preset threshold,

**characterised in that** the method further comprises:

when the coordinates value of the first difference coordinates exceeds the preset threshold, preforming following steps; calculating a ratio of the Y coordinate and X coordinate of the first difference coordinates to obtain a first ratio; calculating coordinate differences between the first color coordinates and color coordinates of each monochromatic light to obtain a plurality of difference coordinates to be processed, and calculating ratios of the Y coordinate and X coordinate of each difference coordinates to be processed respectively to obtain a plurality of ratios to be processed; taking a ratio to be processed of said plurality of ratios to be processed with the smallest difference from the first ratio as a first ratio to be processed, taking the monochromatic light corresponding to the first ratio to be processed as a monochromatic light to be adjusted which needs to be adjusted, and taking the difference between the first ratio to be processed and the first ratio as a first difference to be processed; when the first difference to be processed is zero, multiplying the X coordinate of the first difference coordinates by the X coordinate of the difference coordinates to be processed corresponding to the monochromatic light to be adjusted to obtain a first product, and when the first product is less than zero, reducing a color channel value of the monochromatic light to be adjusted, otherwise, increasing the color channel value of the monochromatic light to be adjusted; when the first difference to be processed isn't zero, calculating the following parameters,

$$A = \frac{(y_a - y_0)}{(x_a - x_0)} \; ; \qquad B = -1; \qquad C = y_a - x_a * \left( \frac{(y_a - y_0)}{(x_a - x_0)} \right);$$

$$x_f = \frac{(B*B*x_1 - A*B*y_1 - A*C)}{(A*A + B*B)};$$

$$y_f = \frac{(-A*B*x_1 + A*A*y_1 - B*C)}{(A*A + B*B)};$$

$$\Delta \quad x_f = \quad x_{f-} \quad x_0;$$

wherein, $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected; when $\Delta x_f$ is less than zero, reducing the color channel value of the monochromatic light to be adjusted, otherwise, increasing the color channel value of the monochromatic light to be adjusted.

2. The method for correcting mixed color according to the claim 1, **characterized in that**, the amount of color channel value change, when the monochromatic light to be adjusted is adjusted, is calculated as following:

acquiring an illumination value of the mixed color to be corrected, and calculating an amount of illumination value change as following when the monochromatic light to be adjusted is adjusted,

$$E_a = \frac{y_1 - y_0}{\frac{y_1 \cdot y_0}{y_a} - y_1} * E_1 ;$$

wherein, $E_a$ is the illumination value that the monochromatic light to be adjusted need to change and $E_1$ is the amount of illumination value change when the monochromatic light to be adjusted is adjusted;
according to the amount of the illumination value change, calculating the amount of color channel value change of the monochromatic light to be adjusted according to a preset linear conversion relationship.

3. The method for correcting mixed color according to the claim 1, **characterized in that**, color coordinates of the each monochromatic light are obtained as following:
testing each monochromatic light under full brightness illumination to obtain the color coordinates of the each monochromatic light.

4. The method for correcting mixed color according to the claim 1, **characterized in that**, further comprising:
when the coordinates value of the first difference coordinates doesn't exceed the preset threshold, no processing is performed.

5. A device for correcting mixed color, wherein the mixed color is that of the light of a lamp,

comprising: color coordinates acquisition module (210), first difference calculation module (220), and color correction module (230), wherein the color correction module (230) comprises first ratio calculation unit (231), ratio to be processed calculation unit (232), first difference to be processed calculation unit (233) and adjustment unit (234);
the color coordinates acquisition module (210) is configured to acquire color coordinates of standard mixed color as first color coordinates, and acquire color coordinates of mixed color to be corrected as second color coordinates, wherein the mixed color to be corrected is obtained by mixing a plurality of monochromatic lights with the standard mixed color as a color mixing target;
the first difference calculation module (220) is configured to calculate a coordinates difference between the first color coordinates and the second color coordinates as first difference coordinates;
the first ratio calculation unit (231) is configured to calculate, when a coordinates value of the first difference coordinates exceeds a preset threshold, the ratio of the coordinate and the X coordinate of the first difference coordinates to obtain first ratio;
the ratio to be processed calculation unit (232) is configured to calculate coordinate differences between the first color coordinates and color coordinates of each monochromatic light to obtain a plurality of difference coordinates to be processed, and calculate the ratio of a Y coordinate and a X coordinate of each difference coordinates to be processed respectively to obtain a plurality of ratios to be processed;
the first difference to be processed calculation unit (233) is configured to take a ratio to be processed of said plurality of ratios to be processed with the smallest difference from the first ratio as a first ratio to be processed, take the monochromatic light corresponding to the first ratio to be processed as a monochromatic light to be adjusted which need to be adjusted, and take the difference between the first ratio to be processed and the first ratio as a first difference to be processed;
the adjustment unit (234) is configured to multiply the X coordinate of the first difference coordinates by the X coordinate of the difference coordinates to be processed corresponding to the monochromatic light to be adjusted to obtain a first product; when the first product is less than zero, reduce a color channel value of the monochromatic light to be adjusted, otherwise, increase the color channel value of the monochromatic light to be adjusted;
when the first difference to be processed isn't zero, calculate the following parameters;

$$A = \frac{(y_a - y_0)}{(x_a - x_0)} ; \qquad B = -1 ; \qquad C = y_a - x_a * \left( \frac{(y_a - y_0)}{(x_a - x_0)} \right) ;$$

$$x_f = {(B*B*x_1 - A*B*y_1 - A*C)} \Big/ {(A*A + B*B)};$$

$$y_f = {(-A*B*x_1 + A*A*y_1 - B*C)} \Big/ {(A*A + B*B)};$$

$$\Delta \quad x_{f=} \quad x_{f-} \quad x_0;$$

wherein $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected;

when $\Delta x_f$ is less than zero, reduce the color channel value of the monochromatic light to be adjusted, otherwise, increase the color channel value of the monochromatic light to be adjusted.

**Patentansprüche**

1. Verfahren zum Korrigieren von Mischfarben, wobei die Mischfarbe die des Lichts einer Lampe ist,

umfassend: Erfassen von Farbkoordinaten einer Standardmischfarbe als erste Farbkoordinaten,
Erfassen von Farbkoordinaten einer zu korrigierenden Mischfarbe als zweite Farbkoordinaten, wobei die zu korrigierende Mischfarbe durch Mischen einer Vielzahl von monochromatischen Lichtern mit der Standardmischfarbe als ein Farbmischziel erhalten wird;
Berechnen einer Koordinatendifferenz zwischen den ersten Farbkoordinaten und den zweiten Farbkoordinaten als erste Differenzkoordinaten;
Beurteilen, ob ein Koordinatenwert der ersten Differenzkoordinaten einen voreingestellten Schwellenwert überschreitet,
**dadurch gekennzeichnet, dass** das Verfahren ferner umfasst:
wenn der Koordinatenwert der ersten Differenzkoordinaten den voreingestellten Schwellenwert überschreitet, Durchführen der folgenden Schritte:

Berechnen eines Verhältnisses der Y-Koordinate und der X-Koordinate der ersten Differenzkoordinaten, um ein erstes Verhältnis zu erhalten;
Berechnen von Koordinatendifferenzen zwischen den ersten Farbkoordinaten und Farbkoordinaten jedes monochromatischen Lichts, um eine Vielzahl von zu verarbeitenden Differenzkoordinaten zu erhalten, und Berechnen von Verhältnissen jeweils der Y-Koordinate und X-Koordinate von jeden der zu verarbeitenden Differenzkoordinaten, um eine Vielzahl von zu verarbeitenden Verhältnissen zu erhalten;
Nehmen eines zu verarbeitenden Verhältnisses der Vielzahl von zu verarbeitenden Verhältnissen mit der kleinsten Differenz vom ersten Verhältnis als ein erstes zu verarbeitendes Verhältnis, Nehmen des monochromatischen Lichts, das dem ersten zu verarbeitenden Verhältnis entspricht, als ein anzupassendes monochromatisches Licht, das angepasst werden muss, und Nehmen der Differenz zwischen dem ersten zu verarbeitenden Verhältnis und dem ersten Verhältnis als eine erste zu verarbeitende Differenz:

wenn die erste zu verarbeitende Differenz null ist, Multiplizieren der X-Koordinate der ersten Differenzkoordinaten mit der X-Koordinate der zu verarbeitenden Differenzkoordinaten, die dem anzupassenden monochromatischen Licht entsprechen, um ein erstes Produkt zu erhalten, und wenn das erste Produkt kleiner als null ist, Reduzieren eines Farbkanalwerts des anzupassenden monochromatischen Lichts, andernfalls Erhöhen des Farbkanalwerts des anzupassenden monochromatischen Lichts;
wenn die erste zu verarbeitende Differenz nicht null ist, Berechnen der folgenden Parameter,

$$A = {(y_a - y_0)} \Big/ {(x_a - x_0)}; \qquad B = -1; \qquad C = y_a - x_a * \left( {(y_a - y_0)} \Big/ {(x_a - x_0)} \right);$$

$$x_f = \left(B * B * x_1 - A * B * y_1 - A * C\right) \Big/ \left(A * A + B * B\right);$$

$$y_f = \left(-A * B * x_1 + A * A * y_1 - B * C\right) \Big/ \left(A * A + B * B\right);$$

$$\Delta x_f = x_f - x_0;$$

wobei $x_a$ bzw. $y_a$ die X-Koordinate bzw. die Y-Koordinate der Farbkoordinaten des anzupassenden monochromatischen Lichts ist, $x_0$ bzw. $y_0$ die X-Koordinate bzw. die Y-Koordinate der Farbkoordinaten der Standardmischfarbe ist und $x_1$ bzw. $y_1$ die X-Koordinate bzw. die Y-Koordinate der Farbkoordinaten der zu korrigierenden Mischfarbe ist;
wenn $\Delta x_f$ kleiner als null ist, Reduzieren des Farbkanalwerts des anzupassenden monochromatischen Lichts, andernfalls Erhöhen des Farbkanalwerts des anzupassenden monochromatischen Lichts.

2. Verfahren zum Korrigieren von Mischfarben nach Anspruch 1, **dadurch gekennzeichnet, dass** das Ausmaß der Farbkanalwertänderung, wenn das anzupassende monochromatische Licht angepasst wird, folgendermaßen berechnet wird:

Erfassen eines Beleuchtungswerts der zu korrigierenden Mischfarbe und Berechnen eines Ausmaßes einer Beleuchtungswertänderung, wenn das anzupassende monochromatische Licht angepasst wird, folgendermaßen,

$$E_a = \frac{y_1 - y_0}{\frac{y_1 * y_0}{y_a} y_1} * E_1;$$

wobei $E_a$ der Beleuchtungswert ist, den das anzupassende monochromatische Licht ändern muss und $E_1$ das Ausmaß der Beleuchtungswertänderung ist, wenn das anzupassende monochromatische Licht angepasst wird;
in Übereinstimmung mit dem Ausmaß der Beleuchtungswertänderung, Berechnen des Ausmaßes der Farbkanalwertänderung des anzupassenden monochromatischen Lichts in Übereinstimmung mit einer voreingestellten linearen Umwandlungsbeziehung.

3. Verfahren zum Korrigieren von Mischfarben nach Anspruch 1, **dadurch gekennzeichnet, dass** Farbkoordinaten jedes monochromatischen Lichts folgendermaßen erhalten werden:
Testen jedes monochromatischen Lichts unter Beleuchtung mit voller Helligkeit, um die Farbkoordinaten jedes monochromatischen Lichts zu erhalten.

4. Verfahren zum Korrigieren von Mischfarben nach Anspruch 1, **dadurch gekennzeichnet, dass** es ferner umfasst:
wenn der Koordinatenwert der ersten Differenzkoordinaten den voreingestellten Schwellenwert nicht überschreitet, wird keine Verarbeitung durchgeführt.

5. Vorrichtung zum Korrigieren von Mischfarben, wobei die Mischfarbe die des Lichts einer Lampe ist, umfassend: ein Farbkoordinatenerfassungsmodul (210), ein Berechnungsmodul für eine erste Differenz (220) und ein Farbkorrekturmodul (230), wobei das Farbkorrekturmodul (230) eine Berechnungseinheit für ein erstes Verhältnis (231), eine Berechnungseinheit für ein zu verarbeitendes Verhältnis (232), eine Berechnungseinheit für eine erste zu verarbeitende Differenz (233) und eine Anpassungseinheit (234) umfasst;
wobei das Farbkoordinatenerfassungsmodul (210) ausgelegt ist, Farbkoordinaten einer Standardmischfarbe als erste Farbkoordinaten zu erfassen und Farbkoordinaten einer zu korrigierenden Mischfarbe als zweite Farbkoordinaten zu erfassen, wobei die zu korrigierende Mischfarbe durch Mischen einer Vielzahl von monochromatischen Lichtern mit der Standardmischfarbe als ein Farbmischziel erhalten wird:

das Berechnungsmodul für eine erste Differenz (220) ausgelegt ist, eine Koordinatendifferenz zwischen den ersten Farbkoordinaten und den zweiten Farbkoordinaten als erste Differenzkoordinaten zu berechnen;
die Berechnungseinheit für ein erstes Verhältnis (231) ausgelegt ist, wenn ein Koordinatenwert der ersten Differenzkoordinaten einen voreingestellten Schwellenwert überschreitet, das Verhältnis der Y-Koordinate und der X-Koordinate der ersten Differenzkoordinaten zu berechnen, um ein erstes Verhältnis zu erhalten;

die Berechnungseinheit für ein zu verarbeitendes Verhältnis (232) ausgelegt ist, Koordinatendifferenzen zwischen den ersten Farbkoordinaten und Farbkoordinaten jedes monochromatischen Lichts zu berechnen, um eine Vielzahl von zu verarbeitenden Differenzkoordinaten zu erhalten, und das Verhältnis jeweils einer Y-Koordinate und einer X-Koordinate von jeden der zu verarbeitenden Differenzkoordinaten zu berechnen, um eine Vielzahl von zu verarbeitenden Verhältnissen zu erhalten;

die Berechnungseinheit für eine erste zu verarbeitende Differenz (233) ausgelegt ist, ein zu verarbeitendes Verhältnis der Vielzahl von zu verarbeitenden Verhältnissen mit der kleinsten Differenz vom ersten Verhältnis als ein erstes zu verarbeitendes Verhältnis zu nehmen, das monochromatische Licht, das dem ersten zu verarbeitenden Verhältnis entspricht, als ein anzupassendes monochromatisches Licht zu nehmen, das angepasst werden muss, und die Differenz zwischen dem ersten zu verarbeitenden Verhältnis und dem ersten Verhältnis als eine erste zu verarbeitende Differenz zu nehmen;

die Anpassungseinheit (234) ausgelegt ist, die X-Koordinate der ersten Differenzkoordinaten mit der X-Koordinate der zu verarbeitenden Differenzkoordinaten zu multiplizieren, die dem anzupassenden monochromatischen Licht entsprechen, um ein erstes Produkt zu erhalten; wenn das erste Produkt kleiner als null ist, einen Farbkanalwert des anzupassenden monochromatischen Lichts zu reduzieren, andernfalls den Farbkanalwert des anzupassenden monochromatischen Lichts zu erhöhen;

wenn die erste zu verarbeitende Differenz nicht null ist, die folgenden Parameter zu berechnen,

$$A = \frac{(y_a - y_0)}{(x_a - x_0)}; \qquad B = -1; \qquad C = y_a - x_a * \left(\frac{(y_a - y_0)}{(x_a - x_0)}\right);$$

$$x_f = \frac{(B * B * x_1 - A * B * y_1 - A * C)}{(A * A + B * B)};$$

$$y_f = \frac{(-A * B * x_1 + A * A * y_1 - B * C)}{(A * A + B * B)};$$

$$\Delta x_f = x_f - x_0;$$

wobei $x_a$ bzw. $y_a$ die X-Koordinate bzw. die Y-Koordinate der Farbkoordinaten des anzupassenden monochromatischen Lichts ist, $x_0$ bzw. $y_0$ die X-Koordinate bzw. die Y-Koordinate der Farbkoordinaten der Standardmischfarbe ist und $x_1$ bzw. $y_1$ die X-Koordinate bzw. die Y-Koordinate der Farbkoordinaten der zu korrigierenden Mischfarbe ist;

wenn $\Delta x_f$ kleiner als null ist, den Farbkanalwert des anzupassenden monochromatischen Lichts zu reduzieren, andernfalls den Farbkanalwert des anzupassenden monochromatischen Lichts zu erhöhen.

## Revendications

**1.** Procédé de correction de couleur mélangée, dans lequel la couleur mélangée est celle de la lumière d'une lampe,

comprenant : acquérir des coordonnées de couleur d'une couleur mélangée standard en tant que premières coordonnées de couleur,

acquérir des coordonnées de couleur d'une couleur mélangée devant être corrigée en tant que secondes coordonnées de couleur, dans lequel la couleur mélangée devant être corrigée est obtenue en mélangeant une pluralité de lumières monochromatiques à la couleur mélangée standard en tant que cible de mélange de couleurs ;

calculer une différence de coordonnées entre les premières coordonnées de couleur et les secondes coordonnées de couleur en tant que premières coordonnées de différence ;

juger si une valeur de coordonnées des premières coordonnées de différence dépasse un seuil prédéfini,

**caractérisé en ce que** le procédé comprend en outre :

lorsque la valeur de coordonnées des premières coordonnées de différence dépasse le seuil prédéfini, réaliser les étapes suivantes :

calculer un rapport de la coordonnée Y et la coordonnée X des premières coordonnées de différence pour obtenir un premier rapport ;

calculer des différences de coordonnées entre les premières coordonnées de couleur et les coordonnées de couleur de chaque lumière monochromatique pour obtenir une pluralité de coordonnées de différence devant être traitées, et

calculer des rapports de la coordonnée Y et la coordonnée X de toutes coordonnées de différence devant être traitées respectivement pour obtenir une pluralité de rapports devant être traités ;

prendre un rapport devant être traité de ladite pluralité de rapports devant être traités avec la plus petite différence avec le premier rapport en tant que premier rapport devant être traité, prendre la lumière monochromatique correspondant au premier rapport devant être traité en tant que lumière monochromatique devant être ajustée qui a besoin d'être ajustée, et prendre la différence entre le premier rapport devant être traité et le premier rapport en tant que première différence devant être traitée ;

lorsque la première différence devant être traitée est nulle, multiplier la coordonnée X des premières coordonnées de différence par la coordonnée X des coordonnées de différence devant être traitées correspondant à la lumière monochromatique devant être ajustée pour obtenir un premier produit, et lorsque le premier produit est inférieur à zéro, réduire une valeur de canal de couleur de la lumière monochromatique devant être ajustée, autrement, augmenter la valeur de canal de couleur de la lumière monochromatique devant être ajustée ; lorsque la première différence devant être traitée n'est pas nulle, calculer les paramètres suivants,

$$A = \frac{(y_a - y_0)}{(x_a - x_0)} \; ; \qquad B = -1 \; ; \qquad C = y_a - x_a * \left( \frac{(y_a - y_0)}{(x_a - x_0)} \right) ;$$

$$x_f = \frac{(B*B*x_1 - A*B*y_1 - A*C)}{(A*A + B*B)} ;$$

$$y_f = \frac{(-A*B*x_1 + A*A*y_1 - B*C)}{(A*A + B*B)} ;$$

$$\Delta \; x_f = x_f - x_0 ;$$

dans lequel $x_a$ et $y_a$ sont respectivement la coordonnée X et la coordonnée Y des coordonnées de couleur de la lumière monochromatique devant être ajustée, $x_0$ et $y_0$ sont respectivement la coordonnée X et la coordonnée Y des coordonnées de couleur de la couleur mélangée standard, et $x_1$ et $y_1$ sont respectivement la coordonnée X et la coordonnée Y des coordonnées de couleur de la couleur mélangée devant être corrigée ;

lorsque $\Delta x_f$ est inférieur à zéro, réduire la valeur de canal de couleur de la lumière monochromatique devant être ajustée, autrement, augmenter la valeur de canal de couleur de la lumière monochromatique devant être ajustée.

2. Procédé de correction de couleur mélangée selon la revendication 1, **caractérisé en ce que** la quantité de changement de valeur de canal de couleur, lorsque la lumière monochromatique devant être ajustée est ajustée, est calculée comme suit :

acquérir une valeur d'éclairement de la couleur mélangée devant être corrigée, et calculer une quantité de changement de valeur d'éclairement comme suit, lorsque la lumière monochromatique devant être ajustée est ajustée,

$$E_a = \frac{y_1 - y_0}{\frac{y_1 \cdot y_0}{y_a} - y_1} * E_1;$$

dans lequel $E_a$ est la valeur d'éclairement dont la lumière monochromatique devant être ajustée a besoin de changer et $E_1$ est la quantité de changement de valeur d'éclairement lorsque la lumière monochromatique devant être ajustée est ajustée ;

en fonction de la quantité du changement de valeur d'éclairement, calculer la quantité de changement de valeur de canal de couleur de la lumière monochromatique devant être ajustée en fonction d'une relation de conversion linéaire prédéfinie.

3. Procédé de correction de couleur mélangée selon la revendication 1, **caractérisé en ce que** les coordonnées de couleur de chaque lumière monochromatique en question sont obtenues comme suit :

tester chaque lumière monochromatique sous un éclairement à pleine luminosité pour obtenir les coordonnées de couleur de chaque lumière monochromatique en question.

4. Procédé de correction de couleur mélangée selon la revendication 1, **caractérisé en ce que**, comprenant en outre :

lorsque la valeur de coordonnées des premières coordonnées de différence ne dépasse pas le seuil prédéfini, aucun traitement n'est réalisé.

5. Dispositif de correction de couleur mélangée, dans lequel la couleur mélangée est celle de la lumière d'une lampe,

comprenant : un module d'acquisition de coordonnées de couleur (210), un module de calcul de première différence (220) et un module de correction de couleur (230), dans lequel le module de correction de couleur (230) comprend une unité de calcul de premier rapport (231), une unité de calcul de rapport devant être traité (232), une unité de calcul de première différence devant être traitée (233) et une unité d'ajustement (234) ;

le module d'acquisition de coordonnées de couleur (210) est configuré pour acquérir des coordonnées de couleur d'une couleur mélangée standard en tant que premières coordonnées de couleur, et acquérir des coordonnées de couleur d'une couleur mélangée devant être corrigée en tant que secondes coordonnées de couleur, dans lequel la couleur mélangée devant être corrigée est obtenue en mélangeant une pluralité de lumières monochromatiques à la couleur mélangée standard en tant que cible de mélange de couleurs ;

le module de calcul de première différence (220) est configuré pour calculer une différence de coordonnées entre les premières coordonnées de couleur et les secondes coordonnées de couleur en tant que premières coordonnées de différence ;

l'unité de calcul de premier rapport (231) est configurée pour calculer, lorsqu'une valeur de coordonnées des premières coordonnées de différence dépasse un seuil prédéfini, le rapport de la coordonnée Y et la coordonnée X des premières coordonnées de différence pour obtenir un premier rapport ;

l'unité de calcul de rapport devant être traité (232) est configurée pour calculer des différences de coordonnées entre les premières coordonnées de couleur et les coordonnées de couleur de chaque lumière monochromatique pour obtenir une pluralité de coordonnées de différence devant être traitées, et calculer le rapport d'une coordonnée Y et d'une coordonnée X de toutes coordonnées de différence devant être traitées respectivement pour obtenir une pluralité de rapports devant être traités ;

l'unité de calcul de première différence devant être traitée (233) est configurée pour prendre un rapport devant être traité de ladite pluralité de rapports devant être traités avec la plus petite différence avec le premier rapport en tant que premier rapport devant être traité, prendre la lumière monochromatique correspondant au premier rapport devant être traité en tant que lumière monochromatique devant être ajustée qui a besoin d'être ajustée, et prendre la différence entre le premier rapport devant être traité et le premier rapport en tant que première différence devant être traitée ;

l'unité d'ajustement (234) est configurée pour multiplier la coordonnée X des premières coordonnées de différence par la coordonnée X des coordonnées de différence devant être traitées correspondant à la lumière monochromatique devant être ajustée pour obtenir un premier produit ; lorsque le premier produit est inférieur à zéro, réduire une valeur de canal de couleur de la lumière monochromatique devant être ajustée, autrement, augmenter la valeur de canal de couleur de la lumière monochromatique devant être ajustée ;

lorsque la première différence devant être traitée n'est pas nulle, calculer les paramètres suivants ;

$$A = \frac{(y_a - y_0)}{(x_a - x_0)} \; ; \qquad B = -1 ; \qquad C = y_a - x_a * \left(\frac{(y_a - y_0)}{(x_a - x_0)}\right) ;$$

$$x_f = \frac{(B*B*x_1 - A*B*y_1 - A*C)}{(A*A + B*B)} ;$$

$$y_f = \frac{(-A*B*x_1 + A*A*y_1 - B*C)}{(A*A + B*B)} ;$$

$$\Delta \quad x_{f=} \quad x_{f-} \quad x_{0} ;$$

dans lequel $x_a$ et $y_a$ sont respectivement la coordonnée X et la coordonnée Y des coordonnées de couleur de la lumière monochromatique devant être ajustée, $x_0$ et $y_0$ sont respectivement la coordonnée X et la coordonnée Y des coordonnées de couleur de la couleur mélangée standard, et $x_1$ et $y_1$ sont respectivement la coordonnée X et la coordonnée Y des coordonnées de couleur de la couleur mélangée devant être corrigée ;

lorsque $\Delta x_f$ est inférieur à zéro, réduire la valeur de canal de couleur de la lumière monochromatique devant être ajustée, autrement, augmenter la valeur de canal de couleur de la lumière monochromatique devant être ajustée.

acquiring color coordinates of standard mixed color as first color coordinates, and acquiring color coordinates of mixed color to be corrected as second color coordinates, wherein the mixed color to be corrected is obtained by mixing a plurality of monochromatic lights with the standard mixed color as color mixing target

S101

calculating coordinates difference between the first color coordinates and the second color coordinates as first difference coordinates

S102

judging whether the coordinates value of the first difference coordinates exceeds preset threshold

S103

when the coordinates value of the first difference coordinates exceeds the preset threshold, calculating the ratio of Y coordinate and X coordinate of the first difference coordinates to obtain first ratio

S104

calculating coordinates difference between the first color coordinates and color coordinates of each monochromatic light to obtain a plurality of difference coordinates to be processed, and calculating the ratio of Y coordinate and X coordinate of each difference coordinates to be processed respectively to obtain a plurality of ratios to be processed

S105

taking a ratio to be processed with the smallest difference from the first ratio as first ratio to be processed, taking the monochromatic light corresponding to the first ratio to be processed as a monochromatic light to be adjusted which need to be adjusted, and taking the difference between the first ratio to be processed and the first ratio as first difference to be processed

S106

when the first difference to be processed is zero, multiplying the X coordinate of the first difference coordinates by the X coordinate of the difference coordinates to be processed corresponding to the monochromatic light to be adjusted to obtain first product. When the first product is less than zero, reducing color channel value of the monochromatic light to be adjusted, otherwise, increasing the color channel value of the monochromatic light to be adjusted;

When the first difference to be processed isn't zero, calculating the following parameters:

$$A = \frac{(y_a - y_0)}{(x_a - x_0)}; \quad B = -1; C = y_a - x_a * \left( \frac{(y_a - y_0)}{(x_a - x_0)} \right)$$

$$x_f = \frac{(B * B * x_1 - A * B * y_1 - A * C)}{(A * A + B * B)};$$

$$y_f = \frac{(-A * B * x_1 + A * A * y_1 - B * C)}{(A * A + B * B)};$$

$$\triangle x_f = x_f - x_0;$$

wherein $x_a$ and $y_a$ respectively are the X coordinate and Y coordinate of the color coordinates of the monochromatic light to be adjusted, $x_0$ and $y_0$ respectively are the X coordinate and Y coordinate of the color coordinates of the standard mixed color, and $x_1$ and $y_1$ respectively are the X coordinate and Y coordinate of the color coordinates of the mixed color to be corrected;

When $\triangle$ less than zero, reducing the color channel value of the monochromatic light to be adjusted, otherwise, increasing the color channel value of the monochromatic light to be adjusted。

S107

Fig. 1

Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710183658
- CN 201710183640
- US 20120019164 A1
- US 20140035465 A1
- WO 201710183658 A